# EUROPEAN PATENT APPLICATION

(11) **EP 4 425 644 A1**
(43) Date of publication of application: **04.09.2024**
(21) Application number: 23160013.1
(22) Date of filing: 03.03.2023
(51) Int. Cl.: H01M 10/44, H01M 10/613, B60L 58/22, H02J 7/00

(54) **ENERGY STORAGE DEVICE FOR A POWER SUPPLY SYSTEM**

(71) Applicant: Siemens Energy AS, 0596 Oslo (NO)
(72) Inventor: Sunde, Håvard, 7054 Ranheim (NO); Skjetne, Arve, 7032 Trondheim (NO)
(74) Representative: Roth, Thomas

(57) **Abstract**

The invention relates to an energy storage device (10) for a power supply system, wherein the energy storage device (10) comprises: energy storage module (4) with a battery cell (11), a cooler (12) which is designed for cooling the battery cell (11), further comprising a resistive sheet (13) which has an electrical resistance and is in electrical contact with the battery cell (11), wherein the resistive sheet (13) is arranged between the battery cell (11) and the cooler (12) .

## Description

The invention relates to an energy storage device for a power supply system. The invention further relates to a method for operating an energy storage device.

Further, this invention relates to an energy storage module and associated method of operation, in particular for a module for storing electrical energy, such as an electrochemical energy storage module, providing electrical energy to an end user.

Stored electrical energy modules, or power units of various types are becoming increasingly common in many applications, in particular for use where there are environmental concerns relating to emissions in sensitive environments, or public health concerns. Stored electrical energy power units are typically used to provide electrical energy to operate equipment, to avoid emissions at the point of use, although that stored energy may have been generated in many different ways. Stored electrical energy may also be used to provide peak shaving in systems otherwise supplied from the grid, or from various types of power generation system, including diesel generators, gas turbines, or renewable energy sources. Aircraft, vehicles, vessels, offshore rigs, or rigs and other powered equipment in remote locations are examples of users of large scale stored electrical energy. Vehicle drivers may use the stored energy power unit in city centres and charge from an internal combustion engine on trunk roads, to reduce the harmful emissions in the towns and cities, or they may charge up from an electricity supply. Ferries which carry out most of their voyage relatively close to inhabited areas, or in sensitive environments are being designed with hybrid, or fully electric drive systems. Ferries may operate with stored energy to power the vessel when close to shore, using diesel generators offshore to recharge the batteries. In some countries the availability of electricity from renewable energy sources to use to charge the stored energy unit means that a fully electric vessel may be used, provided that the stored energy units are sufficiently reliable for the distances being covered, with no diesel, or other non-renewable energy source used at all. Whether hybrid, or fully electric, the stored energy units may be charged from a shore supply when docked. The development of technology to achieve stored energy units that are reliable enough for prolonged use as the primary power source must address certain technical issues.

Battery modules that balance battery cells passively with PCB mounted resistors have some challenges. The typical resistor power ratings limit the maximum balancing current significantly. This makes balancing cells time demanding. The resistors also generate unfavorable heat on the circuit boards and takes up significant space on the boards.

An energy storage module usually comprises several battery cells and several coolers designed to dissipate the heat occurring in the battery cell.

The battery cells are charged regularly, which creates the problem that the electrical charge distribution between the battery cells is different. For this purpose, so-called balancers are used, which are intended to ensure an even charge distribution within the energy storage module. A distinction is made between passive and active balancers. The excess energy of the already full battery cells is converted into heat directly in the battery cell during natural passive balancing.

The frequently used and technically simpler method of a passive balancer only works in the end-of-charge area when the cells of an energy storage module are almost fully charged. In those battery cells that have already reached the end-of-charge voltage, an additional electrical resistance is connected parallel to the battery cell by the balancer, whereby the voltage of this battery cell is limited to the end-of-charge voltage. This battery cell is then only slightly further charged or even slightly discharged, while the battery cells in the series connection, which have not yet reached the end-of-charge voltage, continue to be supplied with the full charging current. The power of the parallel resistor must be adapted to the charging current, as the excess energy leads to heating of the resistor.

It is an aspect of the invention to specify an energy storage module in which the heat dissipation of a resistor is improved during charging.

This object is achieved by an energy storage device according to claim 1 and a method according to claim 13.

An essential idea of the invention is to form the resistance over a large area so that the heat can be better dissipated. The resistive sheets enable the generated heat during cell balancing to be spread onto a large area and directly to the coolers.

This will dramatically improve the cooling of the balancing resistor sheets, enabling higher currents and faster balancing. The stacking of resistive sheets within a battery module also simplifies the assembly process.

Further advantages are: Higher cell balancing current. Faster cell balancing. Better heat dissipation during balancing. Efficiency and cost advantage. Easier assembly when stacking battery modules.

Advantageous further developments are specified in the depending claims.

The properties, features and advantages of this invention described above, and the way in which these can be achieved, will be explained in more detail in conjunction with the invention so as to be clearer and more markedly understandable.

One exemplary embodiment of the invention will be described below with reference to the drawing. This is intended not to illustrate the exemplary embodiment to scale, but rather the drawing, where it is conducive to clarification, is set out in a schematized and/or slightly distorted form.

With regard to additions to the teaching which is directly apparent in the drawing, reference is made to the relevant prior art.

Identical components or components with the same function are marked with the same reference signs.

Embodiments of the invention are described below on the basis of the drawings. These are not intended to represent the embodiments to scale, but rather the drawing, where useful for explanation, is executed in schematized and / or slightly distorted form.

The figures illustrates:
- Figur 1: illustrates an energy storage module in which a cooling device according to the present invention for a modular stored energy system may be used;
- Figur 2: illustrates a part of the energy storage module showing the invention;

Electrical energy storage modules based on electrochemical cells, such as batteries are already in use, for example in hybrid, or electric vehicles. Early large scale batteries were lead acid, but more recently, lithium ion batteries have been developed for electrical energy storage for large scale applications. Li-ion batteries are typically pressurised and the electrolyte is flammable, so they require care in use and storage. A problem which may occur with Li-ion batteries is thermal runaway, which may be caused by an internal short circuit in a battery cell, created during manufacture. Other causes, such as mechanical damage, overcharge, or uncontrolled current may also cause thermal runaway, but the battery system design is typically adapted to avoid these. Manufacturing issues with the cells cannot be ruled out entirely, so precautions are required to minimise the effect should thermal runaway occur. In a large scale Li-ion battery system, the amount of energy that is released during a thermal runaway is a challenge to contain. A thermal event may increase temperatures in a single cell from a standard operating temperature in the range of 20°C to 26 °C to as much as 700°C to 1000°C. Safe operating temperatures are below 60 °C, so this is a significant problem. There are strict regulations in the marine and offshore industries regarding risk to the vessel or rig, one requirement being that there should be no transfer of excess temperature from one cell to another. If overheating occurs, then it should be contained in a single cell and not allowed to spread. In addition, for marine and offshore applications, weight and volume of any equipment is severely restricted, leading to compact, lightweight systems being preferred. It is a challenge to produce a compact, lightweight, system that achieves the required thermal isolation and cools the cell in which excess heating occurs, quickly and efficiently. Another problem is that in a thermal event there may also be release of a large amount of flammable gasses, which may self-ignite at elevated temperatures.

The problem may be addressed by allowing whole modules to enter thermal runaway and simply control the resulting flames and fire with an external fire extinguishing system. In this case there are open flames in the battery space and controlling the resulting flames and fire does not ensure safe transportation and storage. A conventional approach is to use thick aluminium fins between each cell to provide the cooling, as the aluminium has good thermally conductivity and is able to conduct heat away effectively, but this adds weight and volume and still does not ensure safe transportation and storage because heat is conducted extremely well through aluminium (>300 W/mK) and will heat neighbouring cells quickly, if not cooled. During transport and storage, cooling may not be available. The problem of release of flammable gas may be handled by providing a pressure valve in the module casing, releasing the gas at a certain pressure, either into the battery space or into a separate exhaust system. However, conventional pressure release valves are designed to burst under pressure, which leads to other problems. In addition, active cooling may be provided in the exhaust outside the module to avoid self-ignition.

In a Li-ion battery system, it is very important that the temperature of the battery cells does not exceed the prescribed operating temperature and that the cell temperature in the entire system is uniform. Sustained operation outside the prescribed operating temperature window may severely affect the lifetime of the battery cells and increases the risk of thermal runaway occurring.

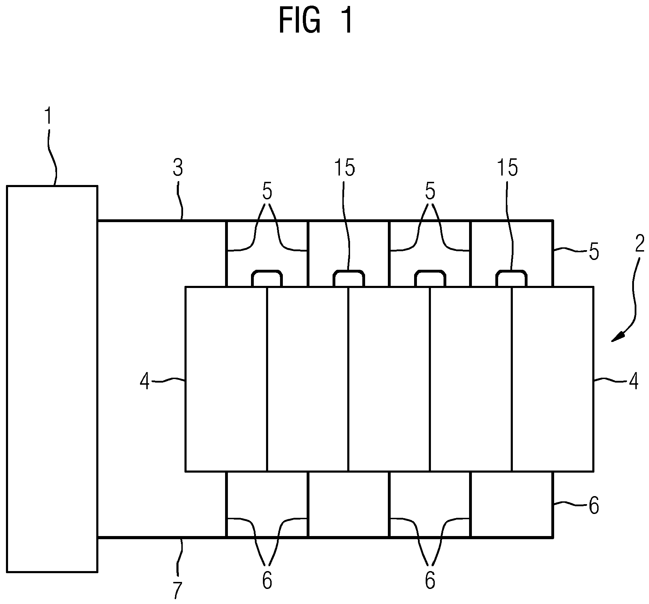

Fig.1 illustrates one example of a stored electrical energy module cooling system according to the invention. A cooling unit 1 provides a cooling fluid to modules of an energy storage unit 2 via pipes 3. In this example, the energy storage unit comprises a plurality of modules 4, each module supplied in parallel with cooling fluid through inlet tubes 5. Alternatively, cooling fluid may be supplied to each module in series. The warmed cooling fluid is removed through outlet tubes 6 and returned to the cooling unit 1 in pipes 7. Typically, the warmed fluid is cooled again in the cooling unit and re-circulated in a closed system.

An energy storage module 4 typically comprises one or more energy storage devices (not shown), for example electrochemical cells, or batteries, each device being mounted on a carrier, the carrier typically comprising an integral cooler, although it may be possible to provide the cooler separate from the carrier. Energy storage devices 10 are electrically connected together in series with a neighbouring energy storage device 10 on the next cooler, or groups of cells may be electrically connected together in parallel, with multiple groups connected together in series. Forming groups of energy storage devices 10 by parallel connection is another way to reduce the number of PCBs needed.

A module typically comprises between 10 and 30 cells, although more or fewer cells per module are possible, according to the application. The module may further comprise a substantially gas tight enclosure, a part of which comprises a non-magnetic material. The cells are preferably prismatic or pouch type cells to get a good packing density. A plurality of energy storage modules may be connected together in series by a DC bus 15 to form an energy storage unit 2, or cubicle. A single cell of a module may have a capacity between 20Ah and 100 Ah, more commonly between 60Ah and 80 Ah, although cells with a capacity as low as a couple of Ah, or over 100Ah, may be used. In one example, there may be up to thirty energy storage devices per module 4 and up to nine modules per cubicle. Typically, the unit comprises between 9 and 21 modules, although this depends upon the application and may be up to 30, or 40, or as many as 50 modules per cubicle in some cases. Multiple cubicles may be installed on a vessel, or platform, or in any other installation.

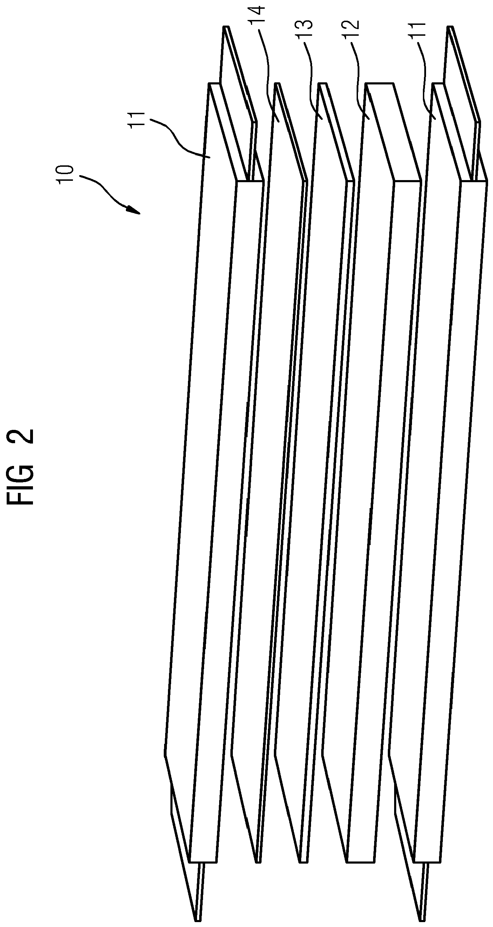

Figure 2 shows an energy storage device 10. The energy storage device 10 comprises an energy storage module 4 having a battery cell 11. In the embodiment shown in Figure 2, only two battery cells 11 are shown for clarity. Between two battery cells 11, a cooler 12 is arranged, wherein the cooler 12 is designed for cooling the battery cell 11. The cooler 12 has cooling channels (not shown) for this purpose on which are flowed through with a cooling medium and thus thermally affect the environment of the cooler 12, whereby cooling is possible. Cooling water is used as cooling medium.

The energy storage module 4 further comprises a resistive sheet 13 which is formed with an electrical resistance and is in electrical contact with the battery cell 11 (not shown). The operation of the resistive sheet 13 is now explained in more detail, wherein it is pointed out that the resistive sheet 13 is required for charging the battery cell 11.

By the resistive sheet 13, an additional resistor is connected parallel to the battery cell 11. As a result, the voltage of this battery cell 11 is limited to an end-of-charge voltage in one charging process. Thus, this (already almost fully charged) battery cell 11 is charged only slightly further or even slightly discharged. The other battery cells 11 in the energy storage device 10 continue to be supplied with the full charging current. This applies to battery cells 11, which have not yet reached the end-of-charge voltage. However, the excess energy leads to heating the resistive sheet 13. According to the invention, the resistive sheet 13 is formed so that it can transfer the heat as well as possible to the cooler 12. Therefore, the resistive sheet 13 is arranged between the battery cell 11 and the cooler 12. The resistive sheet 13 is therefore in direct contact with the cooler 12, in example between the cooler 12 and the resistive sheet 13 no further component should be arranged.

The electrical resistance extends along the resistive sheet 13. The electrical resistance can also be meandering.

For good thermal coupling, the cooler 12 has a length and width that is substantially the same length and width as the resistive sheet 13.

For better mechanical strength, a compression mat 14 is between the resistive sheet 13 and the battery cell 11. The compression mat 14 has essentially the same size as the battery cell 11 and is made of a material that is reversibly deformed by a force effect. A plastic can be used as material. Although the examples have been described with respect to electrochemical cells, such as batteries, which may suffer a thermal runaway and the need to prevent this propagating, other types of stored energy units, such as capacitors, supercapacitors, and fuel cells may suffer if the temperature of modules of the stored energy units regularly goes outside a preferred operating range, reducing the overall lifetime and increasing maintenance costs, so the cooling system may also be beneficial for these. For a vessel, or system, relying on stored energy as its primary, or only power source, reliability is particularly important and optimising operating conditions is desirable. The detailed examples given are for batteries, or electrochemical cells, but the principle of the invention is applicable to other types of energy storage unit.

## Claims

1. Energy storage device (10) for a power supply system, wherein the energy storage device (10) comprises:
energy storage module (4) with a battery cell (11),
a cooler (12) which is designed for cooling the battery cell (11), further comprising
a resistive sheet (13) which has an electrical resistance and is in electrical contact with the battery cell (11),
wherein the resistive sheet (13) is arranged between the battery cell (11) and the cooler (12).

2. Energy storage device (10) according to claim 1,
wherein the electrical resistance is connected parallel to the battery cell (11).

3. Energy storage device (10) according to claim 1 or 2, wherein the electrical resistance extends web-shaped along the resistive sheet (13).

4. Energy storage device (10) according to claim 3, where the electrical resistance extends meandering along the resistive sheet (13).

5. Energy storage device (10) according to any one of claims 1 to 4,
wherein the electrical resistance is connected to the battery cell (11) in such a way that an electrical voltage of the battery cell (11) is limited to a final charge voltage.

6. Energy storage device (10) according to any one of the preceding claims,
wherein the resistive sheet (13) is formed such that the heat developed in the resistive sheet (13) is dis-sipable with the cooler (12).

7. Energy storage device (10) according to any one of the preceding claims,
wherein the resistive sheet (13) is in direct contact with the cooler (12).

8. Energy storage device (10) according to any one of the preceding claims,
wherein the cooler (12) has a length and a width, wherein the resistive sheet (13) has substantially the same length and width.

9. Energy storage device (10) according to any one of the preceding claims,
wherein the cooler (12) with a cooling medium, in particular cooling water is flowable through.

10. Energy storage device (10) according to any one of the preceding claims,
where the battery cell (11) is a galvanic cell.

11. Energy storage device (10) according to any one of the preceding claims,
wherein the energy storage device (10) comprises electrochemical cells.

12. Energy storage device (10) according to any one of the preceding claims,
wherein a compression mat (14) is arranged between the resistive sheet and the battery cell (11).

13. A method for operating an energy storage device (10), wherein the energy storage device (10) comprises:
a battery cell (11),
a cooler (12) which is designed for cooling the battery cell (11), further comprising
a resistive sheet (13) which has an electrical resistance and is in electrical contact with the battery cell (11),
wherein the resistive sheet (13) is arranged between the battery cell (11) and the cooler (12),
wherein during a charging process, each battery cell (11) is charged with charging current, wherein in those battery cells (11) which already reaches the end-of-charge voltage, the resistive plate (13) is connected parallel to the battery cell (11).

14. A method according to claim 13,
wherein the voltage of the battery cell (11) is limited to the end-of-charge voltage.

15. A method according to claim 13 or 14,
wherein the resistive sheet (13) is formed with a meandering electrical resistance.

16. A method according to any one of claims 13 to 15,
wherein a compression mat (14) is arranged between the battery cell (11) and the resistive sheet (13).

17. A method according to any one of claims 13 to 16,
wherein a cooling medium, in particular cooling water flows through the cooler (12).
